# FASCICULE DE BREVET EUROPEEN

(11) **EP 1 991 509 B1**
(45) Date de publication et mention de la délivrance du brevet: **25.04.2012**
(21) Numéro de dépôt: 06840935.8
(22) Date de dépôt: 10.11.2006
(51) Int. Cl.: C04B 11/05

(54) **PROCEDE POUR STABILISER DE L ANHYDRITE III SOLUBLE METASTABLE, PROCEDE DE PREPARATION D UN LIANT HYDRAULIQUE A BASE D ANHYDRITE III SOLUBLE STABILISE, LIANT HYDRAULIQUE OBTENU, UTILISATION DE CE LIANT ET INSTALLATION INDUSTRIELLE POUR LA MISE EN OEUVRE D UN TEL PROCEDE**
VERFAHREN ZUM STABILISIEREN VON METASTABILEM LÖSLICHEM ANHYDRIT III, VERFAHREN ZUR HERSTELLUNG EINES DARAUF BASIERENDEN HYDRAULISCHEN BINDEMITTELS, DAS ERHALTENE HYDRAULISCHE BINDEMITTEL, DIE VERWENDUNGEN DAVON UND TECHNISCHE ANLAGE ZUR DURCHFÜHRUNG DES VERFAHRENS
METHOD FOR STABILISING METASTABLE SOLUBLE ANHYDRITE III, METHOD FOR PRODUCING A HYDRAULIC BINDER BASED THEREON, THE OBTAINED HYDRAULIC BINDER, THE USES THEREOF AND AN INDUSTRIAL PLANT FOR CARRYING OUT SAID METHOD

(30) Priorité: 07.12.2005 WO PCT/IB2005/004006; 17.10.2006 WO PCT/EP2006/010015
(43) Date de publication de la demande: 19.11.2008
(73) Titulaire: Columbeanu, Ion, Bucarest (RO)
(72) Inventeur: DUMOULIN, Edouard, F-06200 Nice (FR); PALACIOS, Crisanto, E-17600 Figueres (ES)
(74) Mandataire: Bozocea, Gina Violeta
(86) Numéro de dépôt international: PCT/EP2006/010828
(87) Numéro de publication internationale: WO 2007/065527

(56) Documents cités:
- EP-A- 0 447 800
- EP-A1- 0 832 860
- WO-A-95/17354
- AT-B- 412 342
- DE-A1- 19 606 075
- DE-A1- 19 737 778
- FR-A- 2 166 919
- FR-A- 2 804 423
- GB-A- 696 799
- GB-A- 1 397 421
- GB-A- 2 006 737
- GB-A- 2 025 259
- GB-A- 2 337 514
- US-A- 4 269 363
- MURAT, M.; EL HAJJOUJI, A.: "Activation of solids by mechanical grinding, consequences for calorimetric investigation on the hydration rate orthorhombic anhydrite" CHIMICA ACTA, vol. 85, 1985, pages 119-122, XP008066981 Amsterdam
- DATABASE WPI Week 199409 Derwent Publications Ltd., London, GB; AN 1994-072908 XP002432861 & RU 2 001 890 C1 (POLEVSKOE CRYOLITE WKS) 30 octobre 1993 (1993-10-30)
- DATABASE WPI Week 199425 Derwent Publications Ltd., London, GB; AN 1994-206192 XP002432862 & JP 06 144894 A (HODOGAYA CHEM IND CO LTD) 24 mai 1994 (1994-05-24)

## Description

L'invention a pour objet un procédé pour stabiliser de l'anhydrite III soluble métastable ainsi qu'un procédé de préparation d'un liant hydraulique à base d'anhydrite III soluble stabilisé.
Elle a également pour objet le liant hydraulique obtenu ainsi que l'utilisation de ce liant hydraulique dans l'industrie cimentaire.
Elle a encore pour objet une installation industrielle permettant la mise en oeuvre d'un tel procédé.

L'invention concerne le domaine technique de l'industrie cimentaire et plus particulièrement les compositions cimentaires issues de la déshydratation du sulfate de calcium.

Les liants hydrauliques à base d'anhydrite III soluble sont bien connus de l'homme du métier. Une déshydratation poussée - de 220°C à 360°C - du sulfate de calcium naturel ou de synthèse (gypse) de formule (CaSO₄, 2H₂O) ou hémihydraté (plâtre) de formule (CaSO₄, ½H₂O), conduit à la formation de l'anhydrite III soluble métastable de formule (CaSO₄, εH₂O) avec ε de 0.1 à 0.2. Une déshydratation encore plus poussée - à partir d'environ 400°C - conduit à la formation de l'anhydrite II (CaSO₄, OH₂O), très faiblement hygroscopique.

L'anhydrite III soluble métastable étant fortement hygroscopique, il se réhydrate rapidement en hémihydrate, ou plâtre β traditionnel, puis retourne à l'état de sulfate de calcium en fonction de l'hygrométrie de l'aire.
L'homme du métier connaît notamment par les brevets FR 2733496 (DUSSEL), FR 2767815 (COUTURIER), FR 2804423 (ENERGETIC INDUSTRIES INTERNATIONAL), WO 00/47531 (COUTURIER) ou encore WO 2005/000766 (COUTURIER) des procédés de préparation d'anhydrite III soluble stabilisé qui comprennent les deux étapes suivantes successives :
a) cuisson d'une composition pulvérulente à base de sulfate de calcium (gypse naturel ou de synthèse ou plâtre) pour former l'anhydrite III soluble métastable ;
b) trempe thermique permettant de stabiliser la phase métastable de l'anhydrite III.

Les procédés de l'art antérieur enseignent donc à l'homme du métier d'appliquer une contrainte thermique sur les particules d'anhydrite III de manière à stabiliser leur phase métastable. Ce brusque refroidissement est particulièrement important, car il permet de bloquer et de fixer la structure cristalline des particules d'anhydrite III pour les stabiliser.

Ce type de procédé connu présente cependant un certain nombre d'inconvénients. En effet, le refroidissement est généralement réalisé par l'injection d'air froid et sec au coeur de la matière. Il apparaît que la qualité des particules d'anhydrite III stabilisées n'est pas régulière, car le refroidissement n'est pas effectif sur l'ensemble des particules.
De plus, une proportion d'air humide présente au moment de l'étape de refroidissement entraîne une réhydratation de l'anhydrite III métastable en hémihydrate de sulfate de calcium si bien que la proportion d'anhydrite III stabilisé obtenue industriellement n'est pas très élevée, à moins d'installation complexe et onéreuse.

Également, le chauffage est habituellement réalisé dans des fours rotatifs nécessitant une quantité importante d'énergie pour fonctionner. En outre, ces fours rotatifs ont une forte inertie, c'est-à-dire qu'il faut un temps important pour les refroidir ou pour leur faire atteindre la température souhaitée. Pour ces raisons, il est difficile et coûteux en temps et en énergie, d'arrêter la production.

Face aux inconvénients de l'art antérieur, le problème technique principal que vise à résoudre l'invention est de stabiliser efficacement des particules d'anhydrite III soluble métastable, sans avoir recours au refroidissement desdites particules.
L'invention a également pour objectif de proposer un procédé permettant de préparer des particules d'anhydrite III stable, simple à mettre en oeuvre et ne nécessitant pas beaucoup d'énergie.
Un autre objectif de l'invention est de proposer une installation industrielle simple et peu coûteuse à réaliser permettant de mettre en oeuvre ce procédé.
L'invention a encore comme objectif de proposer un liant hydraulique à base d'anhydrite III ayant de bonnes performances mécaniques.

Pour résoudre ces problèmes techniques, la demanderesse a maintenant mis en évidence que l'application d'une contrainte mécanique sur des particules d'anhydrite III métastable permettait de stabiliser efficacement lesdites particules.

Au sens de la présente invention, on entend par « *stable* », le fait que la cinétique de réhydratation de la particule d'anhydrite III est fortement ralentie. De cette manière, le liant hydraulique obtenu peut être stocké et conservé un long moment sans contrainte particulière, ses propriétés restant quasiment constantes dans le temps.

Le document MURAT, M. ; EL HAJJOUJI, A. : « Activation of solids by mechanical grinding, concequences for calorimetric investigation on the hydration rate orthorhombic anhydrite ». THERMOCHIMICA ACTA, Vol. 85, 1985, pages 119-122, décrit un procédé pour améliorer la vitesse d'hydratation de l'anhydrite orthombique comprenant :
a) la calcination de la poudre de gypse pendant 5h à 750 °C pour obtenir l'anhydrite CaSO₄ orthorhombique synthétique avec beaucoup de défauts superficiels,
b) après refroidissement, l'anhydrite est micronisée mécaniquement dans un broyeur centrifuge de Fritsch pour une durée de 4 à 120 min.
Ce broyage améliore la réactivité de la surface nouvelle par l'introduction locale de contraintes et défauts qui se comportent comme sites préférentiels dans une réaction chimique. La surface nouvelle est très sensible à la vapeur d'eau. Cependant, cette activation ne présente pas l'avantage de stabiliser la phase métastable de l'anhydrite III.

La solution proposée par l'invention consiste à appliquer une contrainte mécanique sur les particules d'anhydrite III soluble métastable de manière à stabiliser leur phase métastable. Ce procédé peut coûteux en énergie permet de stabiliser efficacement les particules d'anhydrite III en modifiant leur structure cristalline.

Selon une caractéristique avantageuse de l'invention permettant d'appliquer de manière simple une contrainte mécanique sur les particules d'anhydrite III soluble métastable, on impacte ces dernières contre une paroi. Et préférentiellement on injecte les particules d'anhydrite III soluble métastable dans un conduit d'impactage configuré de manière à ce que lesdites particules impactent ses parois lors de leur déplacement.

Selon une autre caractéristique avantageuse de l'invention permettant d'appliquer une contrainte mécanique optimale sur les particules d'anhydrite III soluble métastable, ces dernières sont impactées à une vitesse comprise entre 5 m/s et 30 m/s.

L'invention concerne également un procédé de préparation d'un liant hydraulique à base d'anhydrite III, se caractérisant par le fait que :
a) on chauffe une composition pulvérulente à base de sulfate de calcium pour former de l'anhydrite III soluble métastable,
b) on applique une contrainte mécanique sur les particules d'anhydrite III soluble métastable de manière à stabiliser leur phase métastable.
Ce procédé permet de stabiliser les particules de sulfate de calcium en phases anhydrite III soluble métastable par une contrainte mécanique. Le liant hydraulique obtenu par ce procédé a une bonne tenue à l'humidité et sa réhydratation dans l'air est ralentie. De plus, les performances physiques et mécaniques des produits de type béton ou mortier obtenus par l'utilisation de ce liant sont au moins aussi bonnes que celles des produits obtenus par l'utilisation des liants hydrauliques similaires connus de l'homme du métier.

Selon encore une autre caractéristique avantageuse de l'invention permettant de microniser les particules d'anhydrite III de gros diamètre avant de les contraindre mécaniquement, on chauffe la composition pulvérulente de manière à vaporiser les molécules d'H₂O contenues dans les particules de sulfate de calcium et provoquer l'éclatement de ces dernières. Et préférentiellement, on chauffe la composition pulvérulente à base de sulfate de calcium par un procédé flash à une température comprise entre 400°C et 700 °C et dans une atmosphère saturée en vapeur d'eau.

Selon encore une autre caractéristique avantageuse de l'invention permettant de simplifier la préparation du liant hydraulique, on réalise les étapes a) et b) simultanément en injectant la composition pulvérulente dans un flux d'air chaud saturé en vapeur d'eau et ayant une température comprise entre 400°C et 700 °C, ledit flux d'air chaud traversant le conduit d'impactage. De cette manière, les particules de sulfate de calcium subissent en même temps une contrainte thermique qui a pour effet de les éclater et de créer de l'anhydrite III soluble métastable et une contrainte mécanique qui a pour effet de stabiliser la phase métastable de ces dernières.

Selon encore une autre caractéristique avantageuse de l'invention on réalise une trempe thermique sur les particules obtenues après l'étape b).

Selon une caractéristique avantageuse de l'invention permettant de faire varier les propriétés physiques et mécaniques du liant hydraulique la température et le temps de chauffage de la composition pulvérulente à base de sulfate de calcium sont réglés de manière à former de l'anhydrite III soluble métastable et/ou de l'anhydrite II et/ou de l'hémihydrate β de sulfate de calcium. L'expression « anhydrite III et/ou.anhydrite II et/ou de l'hémihydrate β de sulfate de calcium » doit être comprise comme signifiant « anhydrite III soluble métastable seule » ou « anhydrite III soluble métastable et anhydrite II » ou « anhydrite III soluble métastable et hémihydrate β de sulfate de calcium » ou « anhydrite III soluble métastable et anhydrite II et hémihydrate β de sulfate de calcium ».

Pour éviter que les particules d'anhydrite III soluble métastable ne se réhydratent trop rapidement avant l'étape b), à l'étape a), la température et le temps de chauffage de la composition pulvérulente à base de sulfate de calcium sont réglés de manière à former des particules ayant de l'anhydrite III soluble métastable au coeur et de l'anhydrite II en surface.

Selon une caractéristique préférée de réalisation, on chauffe une composition pulvérulente à base de gypse naturel ou de gypse de synthèse ou d'hémihydrate de sulfate de calcium.

Pour améliorer les propriétés du liant hydraulique, la composition pulvérulente est mélangée avec un ou plusieurs composés de la liste suivante : chaux, hydroxyde de chaux, poudre de marbre, carbonate de calcium, polycarboxylate.

Étant donné les propriétés remarquables constatées par la demanderesse, l'invention a également pour objet le liant hydraulique obtenu par le procédé décrit ci-dessus, ledit liant pouvant être utilisé pour la préparation d'un matériau de type béton ou mortier.

Un autre objet de l'invention est une installation industrielle permettant la mise en oeuvre du procédé décrit précédemment, ladite installation comportant un moyen pour chauffer la composition pulvérulente à base de sulfate de calcium et former de l'anhydrite III soluble métastable et un moyen pour appliquer une contrainte mécanique sur lesdites particules de manière à stabiliser leur phase métastable.

Selon une caractéristique avantageuse de l'invention simplifiant la conception et la mise en oeuvre du procédé, les particules d'anhydrite III soluble métastable sont injectées dans un conduit d'impactage configuré de manière à ce que lesdites particules impactent ses parois lors de leur déplacement, l'entrée dudit conduit étant connectée à un générateur d'air chaud. Et pour augmenter les régions d'impactage, le conduit est préférentiellement de forme sensiblement toroïdale.

Selon encore une autre caractéristique avantageuse de l'invention évitant que les particules d'anhydrite III ne se réhydratent trop rapidement à la sortie du conduit d'impactage, ladite sortie est reliée à un moyen pour séparer la vapeur d'eau des particules solides. Et pour augmenter la rentabilité de l'installation, la vapeur d'eau est préférentiellement dirigée vers un filtre destiné à récupéré des particules fines résiduelles.

Selon encore une autre caractéristique avantageuse de l'invention permettant d'optimiser leur stabilisation ainsi que leur micronisation, les particules sortant du conduit d'impactage peuvent être dirigées vers un second conduit d'impactage connecté à une source d'air comprimé.

Selon encore une autre caractéristique avantageuse de l'invention, un dispositif de trempe thermique est disposé en aval du premier et/ou du second conduit d'impactage.

Pour prévenir toute entrée d'air humide extérieure, l'installation comporte avantageusement un dispositif de pressurisation aménagé de manière à créer une surpression dans ladite installation.

Dans une variante de réalisation, le moyen pour appliquer une contrainte mécanique sur les particules d'anhydrite III soluble métastable, peut être un dispositif à piston aménagé de manière à appliquer une force mécanique sur lesdites particules.

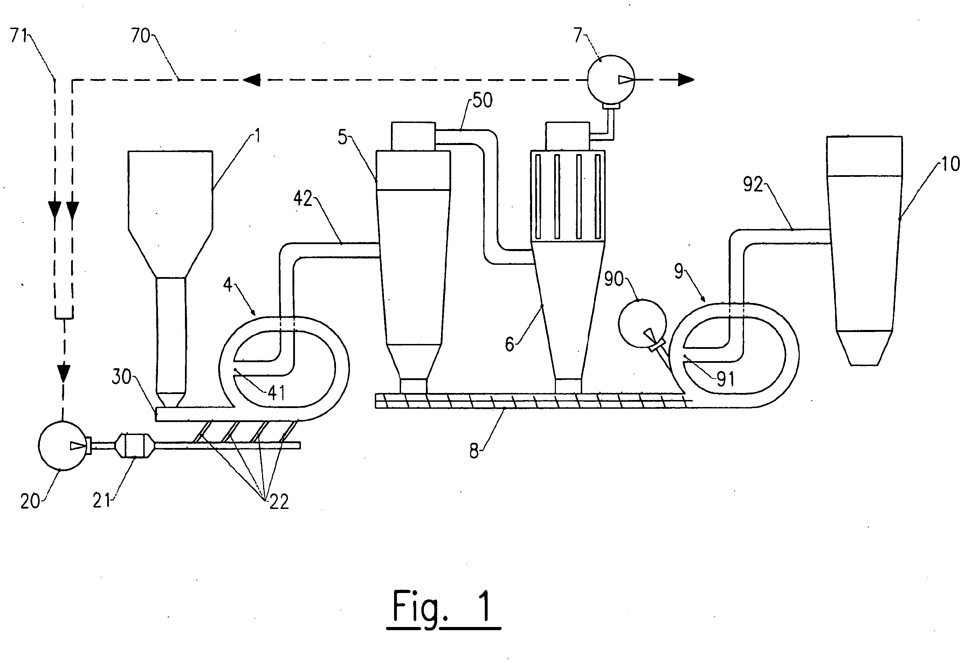

D'autres caractéristiques et avantages de la présente invention ressortiront mieux à la lecture de la description qui va suivre, faite à titre d'exemple indicatif et non limitatif, en regard du dessin annexé sur lequel la figure 1 représente schématiquement un mode préféré de réalisation de l'installation objet de l'invention.

En se rapportant à la figure annexée, une composition pulvérulente à base de sulfate de calcium est préalablement stockée dans un silo 1. La composition pulvérulente utilisée est avantageusement à base de gypse naturel, de gypse de synthèse (notamment sulfogypse, phosphogypse, borogypse, titanogypse) ou d'hémihydrate (α ou β) de sulfate de calcium.

La composition pulvérulente peut être mélangée avec un ou plusieurs composés de la liste suivante : chaux aérienne, chaux hydraulique, poudre de marbre, carbonate de calcium, polycarboxylate. Ces apports complémentaires connus de l'homme du métier permettent d'améliorer les propriétés du liant hydraulique et notamment les résistances mécaniques à la compression, tenue au feu, etc. En pratique, on mélange avantageusement les particules d'anhydrite III soluble métastable et/ou d'anhydrite II et/ou d'hémihydrate β de sulfate de calcium entre 1 % et 15 % en poids avec de la chaux ou de l'hydroxyde de chaux. Ce mélange post calcination vise à améliorer la réaction physico-chimique qui se déroule dans la suite du procédé.
On peut également mélangée la composition pulvérulente avec de la chaux vive dans le but de capter l'humidité résiduelle et/ou l'humidité de l'air ambiant pour ralentir la réhydratation de l'anhydrite III.

La granulométrie de la composition pulvérulente à traiter est comprise entre 20 µm et 15 mm selon la nature du sulfate de calcium utilisé (naturel, de synthèse ou hémihydraté).

La composition pulvérulente est chauffée dans un dispositif de chauffage de manière à ne former que des particules d'anhydrite III soluble métastable ou associées à des particules d'anhydrite II et/ou des particules d'hémihydrate β de sulfate de calcium. La présence d'anhydrite II et/ou d'hémihydrate β de sulfate de calcium permet de modifier les propriétés physiques et mécaniques du liant hydraulique objet de l'invention.

Le rapport en poids anhydrite II/anhydrite III_{soluble} est préférentiellement compris entre 1 % et 100 % selon les applications du liant hydraulique objet de l'invention. Par exemple, un liant ayant un rapport pondéral anhydrite II/anhydrite III_{soluble} compris entre 20 % et 40 % aura de bonnes propriétés mécaniques.

Cette composition pulvérulente est chauffée entre 180°C et 700°C pendant un temps variant de quelques secondes à plusieurs heures. La température et le temps de chauffage dépendent de plusieurs facteurs dont principalement la granulométrie, le type de composition pulvérulente à traiter et le procédé de chauffage employé. On pourra réaliser le chauffage de manière directe ou indirecte, par des procédés de calcination flash, des fours rotatifs, des chaudrons de cuisson ou tout autre dispositif de calcination équivalent.
Le réglage des différents paramètres de calcination permet de régler la proportion d'anhydrite III soluble métastable et/ou d'anhydrite II et/ou d'hémihydrate β de sulfate de calcium en fonction des caractéristiques finales de la composition recherchée.

Selon une caractéristique privilégiée de l'invention, on chauffe la composition pulvérulente à base de sulfate de calcium de manière à vaporiser les molécules d'H₂0 contenues dans les particules de sulfate de calcium et provoquer l'éclatement de ces dernières. Pour ce faire, on préfère mettre en oeuvre le procédé flash décrit ci-dessous, mais tout autre procédé permettant d'aboutir à ce résultat peut être utilisé par l'homme du métier.

Le dispositif de chauffage préféré est avantageusement un calcinateur flash constitué d'une turbine à air 20 associée à un brûleur 21. La composition pulvérulente est injectée dans une gaine 30 agencée avec les injecteurs d'air chaud 22 et est transportée à vitesse élevée (entre 5 m/s et 30 m/s) par le flux d'air chaud ainsi généré. Les injecteurs 22 sont configurés de manière à créer des turbulences et favoriser les échanges thermiques.
On peut réaliser le flash sur des particules de sulfate de calcium déjà micronisées (diamètre maximum de 1 mm), à une température comprise entre 280°C et 320 °C pendant environ 5 secondes, de manière à ne pas surcuire les particules d'anhydrite III.

Selon une caractéristique préférée de l'invention, le flash est réalisé dans une atmosphère saturée en vapeur eau et a une température comprise entre 400°C et 600°C, préférentiellement 500°C. Ces températures élevées permettent de vaporiser les molécules d'H₂O contenues dans les particules de sulfate de calcium, ce qui a pour effet d'éclater ces dernières et diminuer leur diamètre. Il est ainsi possible de traiter des particules de plusieurs millimètres de diamètre (jusqu'à 15 mm) et de diminuer de moitié leur diamètre avant de les contraindre mécaniquement. L'atmosphère saturée en vapeur d'eau permet, même à des températures de l'ordre de 500°C, de former des particules d'anhydrite III soluble métastable sans surcuisson.
En réglant le débit du flux d'air chaud généré par le calcinateur flash, la température de chauffage et le diamètre des particules de la composition pulvérulente, l'homme du métier peut faire varier la quantité d'anhydrite III soluble métastable et/ou d'anhydrite II et/ou d'hémihydrate β de sulfate de calcium. Par exemple, un flux d'air chaud de 500°C, ayant une vitesse de 5 m/s permet de traiter une composition à base de sulfate de calcium ayant une granulométrie de l'ordre de 10 mm, pour former entre 60 % et 80 % d'anhydrite III soluble métastable et entre 20 % et 40 % d'anhydrite II.

Pour éviter que les particules d'anhydrite III soluble en phase métastable ne se réhydratent en cas d'introduction d'air humide extérieur, on peut également régler les différents paramètres de calcination pour former des particules ayant de l'anhydrite III soluble métastable au coeur et de l'anhydrite II en surface. Étant donné que l'anhydrite II est faiblement hygroscopique, l'anhydrite III soluble métastable reste protégée par l'enveloppe d'anhydrite II.

D'autres procédés permettant d'enlever les molécules d'H₂0 contenues dans les particules de sulfate de calcium pour former de l'anhydrite III peuvent être employés. On peut par exemple prévoir d'utiliser des procédés de centrifugation ou utilisant des ultras-sons.

Conformément à l'invention, on applique une contrainte mécanique sur les particules d'anhydrite III de façon à stabiliser leur phase métastable. Il a été mis en évidence que cette contrainte mécanique permet de modifier la structure cristalline des particules d'anhydrite III et/ou d'anhydrite II et/ou d'hémihydrate β de sulfate de calcium, notamment en les densifiant, et d'obtenir des résistances mécaniques plus élevées et de diminuer sensiblement la métastabilité c'est-à-dire la capacité de reprise en eau.
Cette modification de la structure cristalline est due à la collision et à la friction des particules entre-elles, ainsi qu'à une modification de l'énergie de surface desdites particules. On pense que sous l'effet de la contrainte mécanique, la structure cristalline se distord de sorte qu'il n'y ait plus de place disponible pour le retour des molécules d'H₂O.

L'application de la contrainte mécanique est préférentiellement réalisée en impactant les particules d'anhydrite III soluble métastable (et/ou d'anhydrite II et/ou d'hémihydrate β de sulfate de calcium) contre une paroi. Toutefois, d'autres procédés équivalents permettant d'appliquer une contrainte mécanique peuvent être employés. On peut par exemple utiliser un dispositif à piston aménagé de manière à appliquer une force mécanique sur les particules, ces dernières étant écrasées par ledit piston.
L'application de cette contrainte mécanique permet en outre d'associer la phase anhydrite III aux phases anhydrite II et/ou hémihydrate β de sulfate de calcium pour former un nouveau type de liant hydraulique. On peut d'ailleurs prévoir d'appliquer une contrainte mécanique directement sur un mélange contenant de l'anhydrite III soluble stabilisé (par exemple du Gypcement®) de l'anhydrite II et/ou de l'hémihydrate β de sulfate de calcium pour obtenir un liant hydraulique comportant des particules dont la structure cristalline comprend des phases anhydrite III soluble associées à des phases anhydrite II.
En se rapportant à la figure 1, la gaine 30 est reliée à un conduit d'impactage 4 configuré de manière à ce que les particules d'anhydrite III solubles métastables impactent ses parois lors de leur déplacement. Les particules sont projetées à une vitesse comprise entre 5 m/s et 30 m/s contre la paroi, la vitesse amenant à la stabilisation dépendant de la taille et de la nature des particules à stabiliser. La turbine à air 20 associée au brûleur 21 permet de générer un flux d'air chaud ayant une telle vitesse. La synthèse des particules d'anhydrite III (et/ou d'anhydrite II et/ou d'hémihydrate β de sulfate de calcium) par une action commune des chocs thermiques à très haute température et des chocs mécaniques à très haute vitesses assure la cohésion du liant hydraulique.
Le conduit d'impactage 4 est avantageusement de forme sensiblement toroïdale de manière à ce qu'à chaque changement de direction, les particules impactent les parois. Le conduit d'impactage 4 peut être parfaitement toroïdale ou comporter des portions droites avant les changements de direction. Toutefois, le conduit d'impactage 4 peut avoir toute autre configuration permettant aux particules d'impacter sur les parois, par exemple, des conduits en forme de 'L' ou de 'U'. En pratique, on préfère utiliser un turbo-sécheur RINA-JET® fabriqué par la société RIERA NADEU SA.
En impactant sur les parois, les particules d'anhydrite III (et/ou d'anhydrite II et/ou d'hémihydrate β de sulfate de calcium) vont non seulement se stabiliser, mais également s'éclater, ce qui permet de microniser lesdites particules et de réduire la granulométrie entre 5 µm et 50 µm.
Si au niveau du dispositif de chauffage, les paramètres de calcination sont réglés pour former uniquement des particules d'anhydrite III soluble métastable (éventuellement envelopper d'une couche d'anhydrite II), un dispositif d'introduction d'anhydrite II et/ou d'hémihydrate β de sulfate de calcium (non représenté) peut être agencé après, ou avantageusement avant, le premier conduit d'impactage 4.

L'installation représentée sur la figure 1 permet d'exercer sur les particules de la composition pulvérulente et en même temps :
- un choc thermique du au flux d'air chaud généré par la turbine à air 20 et le brûleur 21,
- une contrainte mécanique du à l'impactage des particules sur les parois du conduit d'impactage 4.

II est toutefois possible d'appliquer une contrainte mécanique sur des particules d'anhydrite III soluble métastable (et/ou d'anhydrite II et/ou d'hémihydrate β de sulfate de calcium) non chauffées et préalablement stockées à température ambiante. II est également possible d'appliquer une contrainte mécanique sur des particules d'anhydrite III déjà stabilisée dans le but d'augmenter les caractéristiques mécaniques du liant hydraulique.

L'étape d'application de la contrainte mécanique achève le processus standard de stabilisation de l'anhydrite III. Cette étape peut être répétée successivement dans le temps, à des températures supérieures ou inférieures, dans le but d'améliorer certaines qualités physiques et mécaniques du liant hydraulique tel que le rapport pondéral anhydrite III/anhydrite II, la stabilité du liant à la reprise à l'eau, la cinétique de réhydratation, etc. Cette technologie à plusieurs niveaux offre la possibilité de régler précisément les paramètres requis pour le liant hydraulique et gère les phénomènes cristallographiques des phases d'anhydrite III (et/ou d'anhydrite II et/ou d'hémihydrate β de sulfate de calcium).

En se rapportant à la figure 1, la sortie 41 du conduit d'impactage 4 est disposée sur la face interne dudit conduit. Cet agencement permet de ne récupérer que les particules ayant atteint le diamètre souhaité. Du fait des accélérations centrifuges générées dans le conduit 4, les particules de gros diamètre et donc de poids élevé, sont attirées vers la paroi extérieure dudit conduit contre laquelle elles s'éclatent et se micronisent. Seules les particules de petit diamètre et de faible poids peuvent atteindre la sortie 41 et être récupérées. Tant que les particules ne sont pas micronisées au diamètre voulu, elles ne peuvent atteindre la sortie 41 et continuent de circuler dans le conduit 4.

Conformément à l'installation représentée sur la figure annexée, la sortie 41 du conduit centrifuge 4 est reliée via un conduit 42, à un moyen 5 pour séparer la vapeur d'eau des particules solides. En pratique, il s'agit d'un filtre cyclonique dans lequel les particules solides sont dirigées vers le bas et la vapeur d'eau vers le haut.
Avantageusement, la vapeur d'eau récupérée est dirigée, via un conduit 50, vers un second filtre 6 destiné à récupérer des particules fines résiduelles. Ce second filtre 6 est connecté à un dispositif d'extraction de vapeur 7, du type pompe à air.
Dans le but d'améliorer le rendement énergétique de l'installation, il est possible d'alimenter la turbine à air 20 par l'air chaud 70 issu du dispositif d'extraction de vapeur 7 mélangé à de l'air neuf 71.

Les particules solides issues du conduit d'impactage 4 et/ou du moyen 5 pour séparer la vapeur d'eau des particules solides et/ou du second filtre 6, peuvent être acheminées via un conduit de transport 8, par l'intermédiaire d'une vis d'Archimède, vers un second conduit d'impactage 9 connecté à une source d'air comprimé 90. Le second conduit d'impactage 9 est similaire à celui décrit précédemment et fonctionne de manière identique. Tout autre dispositif apte à appliquer une contrainte mécanique sur les particules peut être utilisé par l'homme du métier.
L'air comprimé permet de mettre en circulation les particules du liant hydraulique dans le second conduit 9 de manière à ce qu'elles puissent impacter les parois de ce dernier à une vitesse adéquate. En pratique on injecte de l'air comprimé froid à haute pression variant de 2 bars à 15 bars. Cette contrainte mécanique achève l'éclatement des particules pour réduire la granulométrie entre 1 µm et 10 µm.
Le liant hydraulique rentrant dans le second conduit d'impactage 9 est à une température inférieure à 120°C du fait des échanges thermiques successifs par contact avec les différents équipements. Toutefois, en calorifugeant ces équipement, il est possible de conserver un liant hydraulique à une température de l'ordre de 300°C. Le contact des particules chaudes avec l'air comprimé froid agit comme une trempe thermique et parachève la stabilisation des particules d'anhydrite III. Tout autre dispositif de trempe thermique connu de l'homme du métier peut être disposé en aval du second conduit d'impactage 9 ou du premier conduit d'impactage 4.

En se rapportant à la figure 1, la sortie 91 du second conduit d'impactage 9 est reliée via un conduit 92 vers un réservoir 10 permettant de stocker le liant hydraulique avant son conditionnement.
Dans une variante de réalisation non représentée, la sortie 91 du second conduit d'impactage 9 est reliée à un troisième conduit d'impactage et ainsi de suite jusqu'à obtenir un liant hydraulique ayant atteint les caractéristiques recherchées.

Dans une variante de réalisation non représentée, les particules solides issues du conduit d'impactage 4 et/ou du moyen 5 pour séparer la vapeur d'eau des particules solides et/ou du second filtre 6, sont acheminées vers un dispositif de calcination flash ayant un conduit droit. Le fait d'avoir un conduit droit permet d'associer efficacement les particules avec d'autres matières minérales (chaux aérienne, chaux hydraulique, chaux vives, poudre de marbre, carbonate de calcium, polycarboxylate, ...). De plus, avec un second procédé flash, on achève le traitement thermique de l'anhydrite III et on peut régler les paramètres de calcination de manière à former des particules ayant de l'anhydrite III à coeur et de l'anhydrite II en surface.

II est avantageux de conserver une atmosphère sèche dans l'ensemble de l'installation (hygrométrie de l'air inférieure à 10 %, préférentiellement comprise entre 0 et 5 %) depuis la sortie du silo de stockage 1 jusqu'au réservoir 10. Pour contrôler cette hygrométrie, on utilise un dispositif de surpression pour éviter toute introduction d'air humide extérieur. Ce dispositif de surpression consiste en un compresseur d'air sec agencé avec des capteurs d'humidité de manière à pressuriser les conduits de transport et l'ensemble de l'installation. Tout autre dispositif de surpression équivalent convenant à l'homme du métier peut être utilisé.
Afin de maintenir une atmosphère sèche dans l'ensemble de l'installation objet de l'invention, on peut également utiliser des extracteurs d'humidité agencés avec des contrôleurs d'hygrométrie.

Le liant hydraulique obtenu possède des caractéristiques tout à fait remarquables :
- stabilité à l'humidité et à la reprise en eau (inférieure à 2 %),
- forte densité des particules,
- grande solubilité,
- hautes résistances mécaniques en association avec toute forme de granulat : Rc variant de 40 MPa à 80 Mpa et Rf variant de 10 Mpa à 20 Mpa.
- très faible porosité liée à la finesse du liant permettant la fabrication de matériaux surdensifiés,
- accroissement des performances d'adhérence sur tout type de support, compatibilité avec des adjuvantations réductrices d'eau induisant les technologies composites à très haute performance,
- qualités esthétiques exceptionnelles consécutives à la finesse et à la densité des matériaux obtenus par association de granulats étudiés,
- amélioration du comportement au feu des compositions élaborées à partir dudit liant hydraulique.

Le liant hydraulique obtenu peut être utilisé dans la préparation d'un matériau de type béton ou mortier. La demanderesse a constaté expérimentalement qu'en associant le liant hydraulique obtenu conformément à l'invention, avec du ciment, par exemple de type Portland ou un hydroxyde de calcium (Chaux), le matériau obtenu avait une tenue à l'eau et des performances mécaniques améliorées, et en particulier lorsqu'on mélange de 70 % à 90 % p/p_{mélange} de liant hydraulique objet de l'invention avec 10 % à 30 % p/p_{mélange} de ciment. Les performances mécaniques sont accrues de 10 % à 15 %.
La demanderesse a également constaté qu'en ajoutant 5 % p/p_{mélange} de chaux au liant hydraulique objet de l'invention, permet de fluidifier le mortier de référence et d'augmenter les résistances mécaniques de 30 %.

## Revendications

1. Procédé pour stabiliser de l'anhydrite III soluble métastable, **se caractérisant par le fait que** l'on applique une contrainte mécanique sur les particules d'anhydrite III soluble métastable de manière modifier leur structure cristalline et stabiliser leur phase métastable, ladite contrainte mécanique étant appliquée en impactant lesdites particules contre une paroi.

2. Procédé selon la revendication 1, dans lequel on injecte des particules d'anhydrite III soluble métastable dans un conduit d'impactage (4) configuré de manière à ce que lesdites particules impactent ses parois lors de leur déplacement.

3. Procédé selon la revendication 2, dans lequel on impacte les particules d'anhydrite III soluble métastable à une vitesse comprise entre 5 m/s et 30 m/s.

4. Procédé de préparation d'un liant hydraulique à base d'anhydrite III, **se caractérisant par le fait que** :
a) on chauffe une composition pulvérulente à base de sulfate de calcium pour former de l'anhydrite III soluble métastable,
b) on applique une contrainte mécanique sur les particules d'anhydrite III soluble métastable de manière à stabiliser leur phase métastable, ladite contrainte mécanique étant appliquée en impactant lesdites particules contre une paroi.

5. Procédé selon la revendication 4, dans lequel on chauffe la composition pulvérulente à base de sulfate de calcium de manière à vaporiser les molécules d'H₂0 contenues dans les particules de sulfate de calcium et provoquer l'éclatement de ces dernières.

6. Procédé selon l'une des revendications 4 ou 5, dans lequel on chauffe la composition pulvérulente à base de sulfate de calcium par un procédé flash à une température comprise entre 400°C et 700°C, dans une atmosphère saturée en vapeur d'eau.

7. Procédé selon l'une des revendications 4 à 6, dans lequel on réalise les étapes a) et b) simultanément en injectant la composition pulvérulente dans un flux d'air chaud saturé en vapeur d'eau et ayant une température comprise entre 400°C et 700°C, ledit flux d'air chaud traversant un conduit d'impactage (4).

8. Procédé selon l'une des revendications 4 à 7, dans lequel on réalise une trempe thermique sur les particules obtenues après l'étape b).

9. Procédé selon l'une des revendications 4 à 8, dans lequel la température et le temps de chauffage de la composition pulvérulente à base de sulfate de calcium sont réglés de manière à former de l'anhydrite III soluble métastable et/ou de l'anhydrite II et/ou de l'hémihydrate β de sulfate de calcium.

10. Procédé selon l'une des revendications 4 à 9, dans lequel la température et le temps de chauffage dé la composition pulvérulente à base de sulfate de calcium sont réglés de manière à former des particules ayant de l'anhydrite III soluble métastable au coeur et de l'anhydrite II en surface.

11. Procédé selon l'une des revendications 4 à 10, dans lequel à l'étape a), on chauffe une composition pulvérulente à base de gypse naturel ou de gypse de synthèse ou d'hémihydrate de sulfate de calcium.

12. Procédé selon la revendication 11, dans lequel la composition pulvérulente est mélangée avec un ou plusieurs composés de la liste suivante : chaux aérienne, chaux hydraulique, chaux vives, poudre de marbre, carbonate de calcium, polycarboxylate.

13. Liant hydraulique comportant de l'anhydrite III soluble stabilisé, **se caractérisant par le fait qu'**il est obtenu par le procédé conforme à l'une des revendications 4 à 12.

14. Utilisation d'un liant hydraulique conforme à la revendication 13, pour la préparation d'un matériau de type béton ou mortier.

15. Installation industrielle pour la mise en oeuvre du procédé conforme à l'une des revendications 4 à 12, comportant un moyen (20, 21, 22) pour chauffer la composition pulvérulente à base de sulfate de calcium et former de l'anhydrite III soluble métastable et un moyen (4, 9) pour appliquer une contrainte mécanique sur lesdites particules de manière à stabiliser leur phase métastable, lesdites particules d'anhydrite III soluble métastable étant injectées dans un conduit d'impactage (4) configuré de manière à ce que lesdites particules impactent ses parois lors de leur déplacement, l'entrée dudit conduit étant connectée à un générateur d'air chaud.

16. Installation selon la revendication 15, dans lequel le conduit d'impactage (4) est de forme sensiblement toroïdale.

17. Installation selon l'une des revendications 15 ou 16, dans laquelle la sortie (41) du conduit d'impactage (4) est reliée à un moyen (5) pour séparer la vapeur d'eau des particules solides.

18. Installation selon la revendication 17, dans laquelle la vapeur d'eau est dirigée vers un filtre (7) destiné à récupéré des particules fines résiduelles.

19. Installation selon l'une des revendications 15 à 18, dans laquelle les particules sortant du conduit d'impactage (4) sont dirigés vers un second conduit d'impactage (9) connecté à une source d'air comprimé.

20. Installation selon l'une des revendications 15 à 19, dans lequel un dispositif de trempe thermique est disposé en aval du premier (4) et/ou du second conduit d'impactage (9).

21. Installation selon l'une des revendications 15 à 20, comportant un dispositif de pressurisation aménagé de manière à créer une surpression dans ladite installation.

## Claims

1. A method to stabilize soluble metastable anhydrite III, **characterized in that** a mechanical stress is applied to soluble metastable anhydrite III particles in order to stabilize their crystalline structure and stabilize their metastable phase, the mechanical stress being applied by impacting the soluble metastable anhydrite III particles against a wall.

2. A method according to claim 1, **wherein** soluble metastable anhydrite III particles are injected into an impacting conduit (4) configured so that the particles impact its walls during their travel.

3. A method according to claim 2, **wherein** the soluble metastable anhydrite III particles are impacted at a velocity between 5 m/s and 30 m/s.

4. A method for obtaining an anhydrite III hydraulic binder, **characterized in that**:
a) a powdery calcium sulfate composition is heated to form soluble metastable anhydrite III, and
b) a mechanical stress is applied to the soluble metastable anhydrite III particles in order to stabilize their metastable phase, the mechanical stress being applied by impacting the soluble metastable anhydrite III particles against a wall.

5. A method according to claim 4, **wherein** the powdery calcium sulfate composition is heated in order to vaporize H₂O molecules contained in the particles of calcium sulfate to determine the breakup of the latter.

6. A method according to any of the claims 4 or 5, **wherein** the powdery calcium sulfate composition is heated by a flash method at a temperature between 400°C and 700°C in an atmosphere saturated with water vapor.

7. A method according to any of the claims 4 to 6, **wherein** steps a) and b) are performed simultaneously by injecting the powdery composition into a stream of warm air saturated with water vapor and having a temperature between 400°C and 700°C, the flow of hot air traversing the impacting conduit (4).

8. A method according to any of the claims 4 to 7, **wherein** a thermal quenching is performed on the particles obtained after step b).

9. A method according to any of the claims 4 to 8, **wherein** the temperature and the heating time of the powdery calcium sulfate composition is regulated in order to form soluble metastable anhydrite III and/or anhydrite II and/or β hemihydrate of calcium sulfate.

10. A method according to any of the claims 4 to 9, **wherein** the temperature and the heating time of the powdery calcium sulfate composition is regulated in order to form particles having soluble metastable anhydrite III at the core and anhydrite II at the surface.

11. A method according to any of the claims 4 to 10, **wherein** in step a) a powdery composition is heated, the powdery composition being based on natural gypsum, synthetic gypsum or hemihydrates of calcium sulfate.

12. A method according to claim 11, **wherein** the powdery composition is mixed with one or more compounds from the following list: air-slaked lime, hydraulic lime, quick lime, marble powder, calcium carbonate, polycarboxylate.

13. A hydraulic binder comprising soluble stabilized anhydrite III, **characterized in that** it is obtained by a method according to any of the claims 4 to 12.

14. Use of a hydraulic binder according to claim 13, for the preparation of a concrete or mortar type material.

15. An industrial facility for the implementation of a method according to any of the claims 4 to 12, including a means (20, 21, 22) for heating the calcium sulfate powdery composition and forming soluble metastable anhydrite III and a means (4, 9) for applying a mechanical stress to the particles in order to stabilize their metastable phase, said soluble metastable anhydrite III particles being injected into an impacting conduit (4) configured so that the particles impact its walls during their travel, the inlet of said conduit being coupled to a hot air generator.

16. Facility according to claim 15, **wherein** the impacting conduit (4) has a substantial toroidal shape.

17. Facility according to any of the claims 15 or 16, **wherein** the outlet (41) of the impacting conduit (4) is coupled to a means (5) for separating the water vapor for the solid particles.

18. Facility according to claim 17, **wherein** the water vapor is directed towards a filter (7) designed to recover fine residual particles.

19. Facility according to any of the claims 15 to 18, **wherein** the particles exiting the impacting conduit (4) are directed to a second impacting conduit (9) coupled to a compressed air source.

20. Facility according to any of the claims 15 to 19, **wherein** a thermal quenching device is positioned downstream from the first (4) and/or second impacting conduit (9).

21. Facility according to any of the claims 15 to 20, further comprising a pressurization device arranged so as to create an overpressure in the facility.

## Patentansprüche

1. Verfahren zur Stabilisierung der löslichen metastabilen Anhydrid III, **dadurch gekennzeichnet, dass** den Partikeln von löslicher metastabiler Anhydrid III eine mechanische Beanspruchung zur Stabilisierung ihrer kristallinen Struktur und zur Stabilisierung der metastabilen Phase angesetzt wird, wobei die mechanische Beanspruchung durch Aufprallen der Partikeln von löslicher metastabiler Anhydrid III gegen eine Wandung angesetzt wird.

2. Verfahren nach Anschpruch 1, **wobei** die Partikeln von löslicher metastabiler Anhydrid III in ein Aufprallrohr (4) eingespritzt werden, welches derart gestaltet ist, dass die Partikeln in ihren Bewegung gegen dessen Wandungen aufprallen.

3. Verfahren nach Anschpruch 2, **wobei** die Partikeln von löslicher metastabiler Anhydrid III mit einer Geschwindigkeit zwischen 5 m/s und 30 m/s aufgeprallt werden.

4. Verfahren zur Herstellung eines hydraulischen Bindemittels auf der Basis von Anhydrid III, **dadurch gekennzeichnet, dass**:
a) eine Zusammensetzung auf der Basis von Kalziumsulfat in pulverigem Zustand derart erhitzt wird, dass lösliche metastabile Anhydrid III entsteht, und
b) den Partikeln von löslicher metastabiler Anhydrid III eine mechanische Beanspruchung zur Stabilisierung deren metastabilen Phase angesetzt wird, wobei die genannte mechanische Beanspruchung durch Aufprallen der Partikeln von löslicher metastabiler Anhydrid III gegen eine Wandung angesetzt wird.

5. Verfahren nach Anspruch 4, **wobei** die Zusammensetzung auf der Basis von Kalziumsulfat in pulverigem Zustand derart erhitzt wird, dass eine Abdampfung der H₂O-Molekülen aus den Partikeln von Kalziumsulfat stattfindet und diese brechen.

6. Verfahren nach einem der Ansprüche 4 bis 5, **wobei** die Zusammensetzung auf der Basis von Kalziumsulfat in pulverigem Zustand durch eine Flash-Methode auf eine Temperatur zwischen 400°C und 700°C, in einer mit Wasserdampf gesättigten Atmosphäre, erhitzt wird.

7. Verfahren nach einem der Ansprüche 4 bis 6, **wobei** die Schritte a) und b) gleichzeitig, durch Einspritzen der Zusammensetzung in pulverigem Zustand in einen mit Wasserdampf gesättigten Heissluftstrom, bei einer Temperatur zwischen 400°C und 700°C, ausgeführt werden, indem der Heissluftstrom das Aufprallrohr (4) durchflutet.

8. Verfahren nach einem der Ansprüche 4 bis 7, **wobei** ein thermisches Quenching der im Schritt b) erhalteten Partikeln durchgeführt wird.

9. Verfahren nach einem der Ansprüche 4 bis 8, **wobei** die Heiztemperatur und die Heizdauer für die Zusammensetzung auf der Basis von Kalziumsulfat in pulverigem Zustand derart eingestellt werden, dass lösliche metastabile Anhydrid III und/oder Anhydrid II und/oder Beta-Kalziumsulfat-Hemihydrat entstehen.

10. Verfahren nach einem der Ansprüche 4 bis 9, **wobei** die Heiztemperatur und die Heizdauer für die Zusammensetzung auf der Basis von Kalziumsulfat in pulverigem Zustand derart eingestellt sind, dass Partikeln mit dem Kern aus löslicher metastabiler Anhydrid III und der Oberfläche aus Anhydrid II erzielt werden.

11. Verfahren nach einem der Ansprüche 4 bis 10, **wobei** im Schritt a) eine Zusammensetzung in pulverigem Zustand erhitzt wird, wobei diese Zusammensetzung in pulverigem Zustand auf natürlichem oder synthetischem Gips oder auf Kalziumsulfat-Hemihydraten basiert.

12. Verfahren nach Anspruch 11, **wobei** die Zusammensetzung in pulverigem Zustand mit einer oder meheren Verbindung/en aus der nachstehenden Liste versetzt wird: Luftkalk, hydraulischer Kalk, Branntkalk, Marmorpulver, Kalziumkarbonat, Polykarboxylat.

13. Hydraulisches Bindemittel aus löslicher metastabiler Anhydrid III, **dadurch gekennzeichnet, dass** dieses durch ein Verfahren nach einem der Ansprüche 4 bis 12 hergestellt wird.

14. Verwendung eines hydraulischen Bindemittels nach Anspruch 13 zur Gewinnung eines Materials des Typs von Beton oder Mörtel.

15. Industrieanlage zur Durchführung eines Verfahrens nach einem der Ansprüche 4 bis 12, umfassend ein Mittel (20, 21, 22) zur Heizung der Zusammensetzung auf der Basis von Kalziumsulfat in pulverigem Zustand und zur Bildung der löslichen metastabilen Anhydrid III, und ein Mittel (4, 9) zur Ansetzung einer mechanischen Beanspruchung an die Partikeln, zur Stabilisierung deren metastabilen Phase, wobei die genannten Partikeln aus löslichen metastabilen Anhydrid III in ein Aufprallrohr eingespritzt werden, (4) welches derart gestaltet ist, dass die Partikeln in Bewegung gegen dessen Wandungen aufprallen, wobei der Einlauf des genannten Rohres an einem Heissluftgenerator angeschlossen ist.

16. Anlage nach Anspruch 15, **wobei** das Aufprallrohr (4) grundsätzlich kreisringförmlich ist.

17. Anlage nach einem der Ansprüche 15 bis 16, **wobei** der Auslass (41) des Aufprallrohrs (4) an einem Mittel (5) zur Trennung des Wasserdampfes von den festen Partikeln angeschlossen wird.

18. Anlage nach Anspruch 17, **wobei** der Wasserdampf in Richtung auf ein Filter (7) geleitet wird, welcher zur Rückgewinnung der feinen Restkörperchen vorgesehen ist.

19. Anlage nach einem der Ansprüche 15 bis 18, **wobei** die aus dem Aufprallrohr (4) heraustretenden Partikeln in Richtung auf ein zweites, an einer Druckluftquelle angeschlossenen Aufprallrohr (9), geleitet werden.

20. Anlage nach einem der Ansprüche 15 bis 19, **wobei** dem ersten (4) und/oder dem zweiten Aufprallrohr (9) eine Vorrichtung zum thermischen Quenching nachgeschaltet ist.

21. Anlage nach einem der Ansprüche 15 bis 20, welche auch eine Druckvorrichtung umfasst, die derart eingerichtet wird, um in der Anlage einen Überdruck zu erzeugen.
